# EUROPEAN PATENT APPLICATION

(11) **EP 4 807 712 A1**
(43) Date of publication of application: **16.09.2026**
(21) Application number: 25162845.9
(22) Date of filing: 11.03.2025
(51) Int. Cl.: G08G 1/00

(54) **SYSTEM AND METHOD FOR CONTROLLING ONE OR MORE VEHICLES**

(71) Applicant: Volvo Autonomous Solutions AB, 405 08 Göteborg (SE)
(72) Inventor: WIBERG, Wilhelm, 436 39 ASKIM (SE); BERGQUIST, Stefan, 417 27 GÖTEBORG (SE)
(74) Representative: Kransell & Wennborg KB

(57) **Abstract**

The present disclosure relates to a computer system (100) for trajectory planning of one or more vehicles (10, 10a to 10n), in particular one or more autonomous heavy-duty vehicles, operating within a confined geographical area (200), the computer system comprising processing circuitry configured to: determine one or more geographical zones (224, 226, 228) within the confined geographical area where a vehicle positioning system arrangement (40, 50, 60) is anticipated to experience reduced positioning reliability or accuracy; determine positions of the vehicles within the confined geographical area; determine, based on the one or more geographical zones and the positions of the vehicles, that at least one vehicle (10b) is anticipated to operate, or is operating in a geographical zone among the one or more geographical zones with anticipated reduced positioning reliability or accuracy; and adapt one or more trajectories of one or more other vehicles (10a) in response to the determination that the at least one vehicle is anticipated to operate, or is operating in the geographical zone with anticipated reduced positioning reliability or accuracy, so as to avoid approaching the at least one vehicle.

## Description

### TECHNICAL FIELD

The disclosure relates generally to the field of controlling one or more vehicles operating in a confined geographical area, such as one or more autonomous heavy-duty vehicles operating in a confined area. In particular aspects, the disclosure relates to a computer system, a system, and methods for controlling one or more vehicles operating in a confined geographical area. The disclosure can be applied to heavy-duty vehicles, such as trucks, buses, and construction equipment, among other vehicle types. In particular, the disclosure can be applied to autonomous vehicles, such as unmanned autonomous vehicles operating in a confined geographical area. Although the disclosure may be described with respect to a particular vehicle, the disclosure is not restricted to any particular vehicle.

### BACKGROUND

Autonomous vehicles have witnessed widespread adoption in various industries, transforming efficiency and safety in tasks such as material transport and handling in confined geographical areas, e.g., transportation of bulk material from a loading zone to an unloading zone. However, challenges persist when deploying autonomous vehicles during changing environmental conditions, when integrating autonomous vehicles with manually driven vehicles, as well as in hilly terrains in the confined geographical area.

By way of example, hilly terrains introduce complexities in navigation, requiring vehicles to adapt to varying inclines and declines while maintaining operational performance. In confined spaces, such as loading areas, the maneuverability of autonomous vehicles may also become a critical factor for avoiding collisions and ensuring the safety of both equipment and personnel. Furthermore, the maneuverability of autonomous vehicles in such spaces may occasionally face challenges in positioning determination due to various disturbances, including signal processing disturbances of positioning data.

These challenges can negatively impact the productivity of autonomous vehicles operating within confined geographical areas. Consequently, there is a continuing need for further improvements in the field of autonomous vehicles, particularly autonomous heavy-duty vehicles operating in confined geographical areas alongside other vehicles and moving objects.

### SUMMARY

According to a first aspect of the disclosure, there is provided a computer system for trajectory planning of one or more vehicles, in particular one or more autonomous heavy-duty vehicles, operating within a confined geographical area, the computer system comprising processing circuitry configured to: determine one or more geographical zones within the confined geographical area where a vehicle positioning system arrangement is anticipated to experience reduced positioning reliability or accuracy; determine positions of the vehicles within the confined geographical area; determine, based on the one or more geographical zones and the positions of the vehicles, that at least one vehicle is anticipated to operate, or is operating in a geographical zone among the one or more geographical zones with anticipated reduced positioning reliability or accuracy; and adapt one or more trajectories of one or more other vehicles in response to the determination that the at least one vehicle is anticipated to operate, or is operating in the geographical zone with anticipated reduced positioning reliability or accuracy, so as to avoid approaching the at least one vehicle.

The disclosure is at least partly based on the realization that deploying and controlling autonomous vehicles, such as heavy-duty vehicles, within a confined geographical area presents challenges, particularly when positioning system accuracy is degraded. Heavy-duty vehicles often operate in industrial environments, such as construction sites, mining operations, and logistics hubs, where absolute positioning data (e.g., from GNSS) may be unreliable or temporarily lost due to obstructions such as tunnels, large structures, or extreme environmental conditions. Positioning accuracy may also be compromised when relying on lidar-based localization or relative positioning methods, particularly when operating in dusty, foggy, or GPS-denied environments.

Moreover, vehicle positioning failures are not limited to individual vehicles but may often affect fleet-wide coordination. If one vehicle experiences degraded localization, nearby vehicles may not be able to accurately assess its position, increasing the risk of unsafe interactions, traffic congestion, and mission disruptions. Prior approaches require each vehicle to compensate for its own localization uncertainty, often leading to conservative worst-case assumptions such as unnecessary stopping or excessive slowdowns.

The first aspect of the disclosure may seek to enhance the reliability, efficiency, and safety of autonomous vehicle operations when positioning accuracy is degraded. More specifically, the disclosure may enable the computer system to identify and respond to geographical zones within the confined area where positioning accuracy is anticipated to be reduced, thereby allowing proactive trajectory adaptation for other vehicles within the same environment. Instead of individual vehicles operating in isolation and reacting only when localization fails, the proposed computer system coordinates trajectory adaptations across multiple vehicles to minimize, or at least reduce potential disruptions and prevent unsafe interactions.

By defining and storing preidentified risk geographical zones, the computer system allows for predictive trajectory adjustments, preventing multiple vehicles from entering an area of degraded positioning simultaneously.

A technical benefit may include enhanced operational safety and situational awareness for fleets of autonomous heavy-duty vehicles, particularly in challenging environments where absolute positioning data is unreliable. The proposed computer system may reduce the likelihood of collisions and operational inefficiencies by proactively managing vehicle interactions in geographical zones with degraded localization accuracy. Another technical benefit may include improved traffic flow efficiency, as trajectory adaptations can be prioritized based on mission data and site-level coordination, ensuring continuous vehicle operation with minimal disruption.

By implementing predefined trajectory adjustments, the computer system enables continuous operation despite degraded absolute positioning data, thereby reducing vehicle downtime and improving fleet productivity. The computer system may further compensate for limitations of secondary positioning methods, such as error accumulation in odometry-based positioning, by dynamically adjusting vehicle spacing and trajectory constraints to account for increasing localization uncertainty over time.

Another technical benefit may include a cost-effective positioning approach, allowing for fleet-wide autonomous operation without requiring high-cost, high-precision localization hardware in all vehicles. Instead of equipping each vehicle with highly precise absolute positioning, the computer system, integrated into a central site control system, may manage trajectory adaptations based on the anticipated accuracy of different positioning systems.

By proactively managing high-risk localization zones, i.e. the geographical zones, the computer system may minimize, or at least reduce unnecessary stops and delays while ensuring that vehicles experiencing degraded positioning remain separated from other vehicles, thereby reducing the risk of collisions and maintaining operational efficiency. The ability to incorporate cost-effective relative positioning compensation further reduces reliance on high-cost absolute positioning systems. Moreover, the computer system may support mission-prioritized trajectory planning, allowing for more efficient site operations with reduced impact on productivity, even in cases where localization challenges arise.

In the context of the present disclosure, trajectory planning refers to the determination and adaptation of movement paths (vehicle pathways) for autonomous heavy-duty vehicles within the confined geographical area. Such adaptations may involve re-routing to avoid areas with reduced positioning accuracy, adjusting speed, stopping or yielding, increasing following distances, modifying trajectories incrementally, altering right-of-way priorities, or employing alternative localization methods. The adaptations are executed by the computer system to facilitate safe and efficient navigation by modifying the trajectories of vehicles in response to the presence of at least one vehicle in a geographical zone where reduced positioning reliability or accuracy is anticipated.

To this end, the proposed computer system allows for improving the control of vehicles in a confined geographical area. Moreover, the proposed computer system may contribute to a more sustainable and cost-effective utilization of vehicle fleets in confined geographical areas.

In the context of the present disclosure, the term positioning reliability typically refers to the ability of the positioning system to provide continuous and stable position updates over time, and the term positioning accuracy typically refers to the deviation of the estimated position from the actual position.

Optionally in some examples, including in at least one preferred example, the processing circuitry may be configured to determine the one or more geographical zones based on data indicative of predetermined one or more geographical zones that are stored in a database accessible to the processing circuitry. A technical benefit may include improving the accuracy and efficiency of trajectory planning by relying on predefined knowledge of geographical zones with reduced positioning reliability. Predefined zones allows for adapting the trajectories before the vehicles enter the zone(s), thus providing more possibilities for efficient routing of vehicles.

Optionally in some examples, including in at least one preferred example, the processing circuitry may be configured to determine the one or more geographical zones based on data collected during operation of the one or more vehicles. A technical benefit may include improving the adaptability of the computer system by continuously refining the identification of geographical zones based on real-world vehicle data.

Optionally in some examples, including in at least one preferred example, the data may comprise diagnostics data from one or more vehicle positioning system arrangements of the one or more vehicles. A technical benefit may include increasing the robustness of trajectory planning by leveraging diagnostic data from vehicle positioning systems. By monitoring the performance and health of positioning components, the computer system can preemptively identify potential positioning failures and adjust vehicle trajectories accordingly.

Optionally in some examples, including in at least one preferred example, the processing circuitry may be configured to determine the one or more geographical zones from data indicative of any one of a physical characteristic and an environmental condition of the confined geographical area that may negatively impact the performance of the vehicle positioning system arrangements of the vehicles. A technical benefit may include enhancing predictive accuracy by incorporating environmental and physical site characteristics into trajectory planning. Additionally, this allows for identifying potential positioning challenges even before any vehicle has traveled through the area, enabling proactive traffic planning in advance of vehicle passage.

Optionally in some examples, including in at least one preferred example, the processing circuitry may be configured to adapt one or more trajectories of one or more other vehicles to control a number of vehicles present in a geographical zone at any given time. A technical benefit may include preventing congestion and reducing the risk of positioning errors affecting multiple vehicles simultaneously. By limiting the number of vehicles within a geographical zone experiencing reduced positioning reliability, the computer system may improve operational efficiency and safety by ensuring that vehicles maintain adequate spatial separation while operating under uncertain localization conditions.

Optionally in some examples, including in at least one preferred example, the processing circuitry may be configured to adapt at least one trajectory of at least one other vehicle to follow a trajectory of another vehicle. A technical benefit may include increasing localization stability by allowing vehicles experiencing degraded positioning accuracy to follow a vehicle with a more reliable positioning source. Such an approach may leverage a more reactive-based configuration. Adapting at least one trajectory of at least one other vehicle to follow a trajectory of another vehicle may further assist in managing positioning uncertainty, specifically in determining how close a vehicle with reduced localization accuracy is allowed to drive near other vehicles.

Optionally in some examples, including in at least one preferred example, the processing circuitry may be configured to continuously identify new geographical zones with reduced positioning reliability or accuracy in a vehicle positioning system arrangement of any vehicle. A technical benefit may include enhancing adaptability by dynamically updating the awareness of positioning failures. Such configuration may also enable the computer system to react in real-time to newly detected localization failures, ensuring that trajectory adaptations remain relevant even when unexpected positioning errors occur.

Optionally in some examples, including in at least one preferred example, the vehicle positioning system arrangement may comprise a primary positioning system in the form of an absolute positioning system and a secondary positioning system configured to rely on relative positioning, the secondary positioning system being any one of an inertial measurement unit (IMU), lidar, odometry, radar, ultrasonic sensor, mono camera, stereo camera, wheel speed sensor, steering angle sensor, and gyroscope. A technical benefit may include increasing system resilience by allowing vehicles to switch between absolute and relative positioning systems in response to degraded localization accuracy. The availability of a secondary positioning system may enable vehicles to continue navigating safely even in GNSS-denied environments.

Optionally in some examples, including in at least one preferred example, the absolute positioning system may include a global navigation satellite system (GNSS).

Optionally in some examples, including in at least one preferred example, the relative positioning system may comprise the inertial measurement unit, lidar, radar, ultrasonic sensor, mono camera, stereo camera, wheel speed sensor, steering angle sensor, and gyroscope. A technical benefit may include a robust and versatile approach to vehicle positioning and environmental perception, enabling the vehicle to adapt to a wide range of operational environments by leveraging different sensor technologies.

Optionally in some examples, including in at least one preferred example, the secondary positioning system may be configured to rely on relative positioning, and the processing circuitry is configured to account for uncertainty associated with the secondary positioning system by assuming a reduced safe distance between adjacent vehicles to prevent collisions. A technical benefit may include reducing the risk of collisions by dynamically adjusting vehicle separation distances based on the uncertainty associated with relative positioning. Since odometry-based localization may accumulate errors over time, the computer system may thus compensate for increasing uncertainty by ensuring that vehicles maintain an appropriate buffer distance, thereby preventing unsafe proximity between vehicles with degraded localization accuracy.

Optionally in some examples, including in at least one preferred example, the processing circuitry may be configured to prioritize trajectory adaptation based on mission data for the vehicles. A technical benefit may include enhancing site operations by ensuring that trajectory adaptations consider mission-critical factors, such as delivery deadlines, energy consumption, and route efficiency. By prioritizing adaptations based on mission data, the computer system may minimize, or at least reduce disruptions to high-priority tasks while maintaining safe and coordinated vehicle movements.

Optionally in some examples, including in at least one preferred example, the processing circuitry may be configured to determine a position of a vehicle based on a previously determined positioning of the vehicle. Optionally in some examples, including in at least one preferred example, the processing circuitry may be configured to determine positions of the vehicles based on previously determined positioning of the vehicles.

Optionally in some examples, including in at least one preferred example, the previously determined positioning is a positioning point determined from high-confidence absolute positioning data by an absolute positioning system.

Optionally in some examples, including in at least one preferred example, the previously determined positioning of any one of the vehicles may be determined from the latest received high-confidence absolute positioning data. The latest received high-confidence absolute positioning data is received from the absolute positioning system.

Optionally in some examples, including in at least one preferred example, the provision to determine that absolute positioning data of any one of the vehicles within the confined geographical area is of low confidence or absent may comprise receiving data indicative of that any one of the vehicles within the confined geographical area is subject to low confidence positioning data or a lack of positioning data.

Optionally in some examples, including in at least one preferred example, the processing circuitry may be configured to reactively adapting one or more trajectories of one or more other vehicles in response to receiving data from a vehicle, among the one or more vehicles, indicating that the vehicle positioning system arrangement of the vehicle is experiencing, or is anticipated to experience, reduced positioning reliability or accuracy in the confined geographical area. Moreover, such a configuration may include to adapt the one or more trajectories of the one or more vehicles in response to the received data to avoid approaching the vehicle experiencing, or is anticipated to experience, reduced positioning reliability or accuracy. A technical benefit may include providing a combination of a proactive-based configuration and a reactive-based configuration to trajectory planning of vehicles.

According to a second aspect of the disclosure, there is provided a system comprising the computer system according to the first aspect and a plurality of vehicles, wherein the computer system comprising processing circuitry configured to control the plurality of vehicles. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicles are autonomous heavy-duty vehicles. Optionally in some examples, including in at least one preferred example, the vehicles are autonomous electric heavy-duty vehicles.

According to a third aspect of the disclosure, there is provided a computer-implemented method for trajectory planning of one or more vehicles, in particular one or more autonomous heavy-duty vehicles, operating within a confined geographical area, the method comprising: determining, by processing circuitry of a computer system, one or more geographical zones within the confined geographical area where a vehicle positioning system arrangement is anticipated to experience reduced positioning reliability or accuracy; determining, by the processing circuitry, positions of the vehicles within the confined geographical area; determining, by the processing circuitry, based on the one or more geographical zones and the positions of the vehicles, that at least one vehicle is anticipated to operate, or is operating in a geographical zone among the one or more geographical zones with anticipated reduced positioning reliability or accuracy; and adapting, by the processing circuitry, one or more trajectories of one or more other vehicles in response to the determination that the at least one vehicle is anticipated to operate, or is operating in the geographical zone with anticipated reduced positioning reliability or accuracy, so as to avoid approaching the at least one vehicle. The third aspect of the disclosure may seek to solve the same problem(s) as described for the first to second aspects of the disclosure. Thus, effects and features of the third aspect of the disclosure are largely analogous to those described above in connection with the first and second aspects of the disclosure.

According to a fourth aspect of the disclosure, there is provided a computer program product comprising program code for performing, when executed by the processing circuitry comprised in the computer system of the first aspect, the method of the third aspect.

According to a fifth aspect of the disclosure, there is provided a non-transitory computer-readable storage medium comprising instructions, which when executed by the processing circuitry of the first aspect, cause the processing circuitry to perform the method of the third aspect.

According to a sixth aspect of the disclosure, there is provided a computer system for trajectory planning of one or more vehicles, in particular one or more autonomous heavy-duty vehicles, operating within a confined geographical area, the computer system comprising processing circuitry configured to determine positions of the vehicles within the confined geographical area, receive data from at least one vehicle indicating that a vehicle positioning system arrangement is experiencing, or is anticipated to experience reduced positioning reliability or accuracy, and based on the received data, adapt one or more trajectories of one or more vehicles to avoid approaching the vehicle experiencing, or anticipated to experience, reduced positioning reliability or accuracy.

The sixth aspect of the disclosure may seek to provide a reactive-based method to trajectory planning of vehicles. A technical benefit may include the ability to dynamically adapt vehicle trajectories in real time without relying on predefined geographical zones with reduced positioning reliability. By continuously monitoring vehicle positioning data and responding to unexpected localization failures, the system allows for uninterrupted and safe operation of autonomous heavy-duty vehicles, even in environments where positioning reliability may degrade unpredictably.

Optionally, in some examples, including in at least one preferred example, the processing circuitry may be further configured to continuously identify new geographical zones where positioning reliability or accuracy is reduced, based on the positions of the vehicles and data indicative of vehicle positioning system performance.

Optionally, in some examples, including in at least one preferred example, the processing circuitry may be further configured to determine, based on the identified geographical zones, that at least one vehicle is operating, or is anticipated to operate, in a geographical zone with reduced positioning reliability or accuracy.

Optionally, in some examples, including in at least one preferred example, the processing circuitry may be further configured to adapt at least one trajectory of the vehicle experiencing, or anticipated to experience, reduced positioning reliability or accuracy to follow a trajectory of another vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits and/or technical improvements.

### BRIEF DESCRIPTION OF THE DRAWINGS

Examples are described in more detail below with reference to the appended drawings.
**FIGS. 1A - 1B** illustrate exemplary views of autonomous heavy-duty vehicles configured to operate within a confined geographical area, according to an example.
**FIG. 2** illustrates an exemplary overview of a confined geographical area with a number of autonomous vehicles, according to examples.
**FIGS. 3A - 3B** illustrate enlarged views of various vehicle situations in FIG. 2, according to examples.
**FIG. 4** is a flow chart of an exemplary method to control a vehicle according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure is at least partly based on the realization that deploying and controlling autonomous vehicles, such as heavy-duty vehicles, within a confined geographical area presents challenges, particularly when positioning system accuracy is degraded. Heavy-duty vehicles often operate in industrial environments, such as construction sites, mining operations, and logistics hubs, where absolute positioning data (e.g., from GNSS) may be unreliable or temporarily lost due to obstructions such as tunnels, large structures, or extreme environmental conditions. Positioning accuracy may also be compromised when relying on lidar-based localization or relative positioning methods, particularly when operating in dusty, foggy, or GPS-denied environments. Complications arise particularly when data loss occurs due to sensor coverage issues or changes in environmental features. Sensor coverage can be temporarily obstructed by elements such as dust or rain.

Moreover, vehicle positioning failures are not limited to individual vehicles but may often affect fleet-wide coordination. If one vehicle experiences degraded localization, nearby vehicles may not be able to accurately assess its position, increasing the risk of unsafe interactions, traffic congestion, and mission disruptions. Prior approaches require each vehicle to compensate for its own localization uncertainty, often leading to conservative worst-case assumptions such as unnecessary stopping or excessive slowdowns.

For these and other reasons, there is still a need for improving the operations of vehicles in confined geographical areas, such as the operation of autonomous heavy-duty vehicles in confined geographical areas.

To remedy this, the present disclosure provides a computer system, a system including the computer system, and methods for controlling at least one of the vehicles in the confined geographical area.

Thus, the examples in the disclosure seek to enhance the reliability, efficiency, and safety of autonomous vehicle operations when positioning accuracy is degraded. More specifically, the disclosure may enable the computer system to identify and respond to geographical zones within the confined area where positioning accuracy is anticipated to be reduced, thereby allowing proactive trajectory adaptation for other vehicles within the same environment. Instead of individual vehicles operating in isolation and reacting only when localization fails, the computer system is configured to coordinate trajectory adaptations across multiple vehicles to minimize, or at least reduce potential disruptions and prevent unsafe interactions. Hereby, the computer system allows the vehicle(s) to be operated in a safe manner even in challenging navigation situations.

A technical benefit may include enhanced productivity with maintained safety for vehicles within confined areas and across diverse environmental conditions where e.g. traditional GPS data may be intermittent or unavailable. Another technical benefit may include a cost-effective positioning approach, allowing for fleet-wide autonomous operation without requiring high-cost, high-precision localization hardware in all vehicles. Instead of equipping each vehicle with highly precise absolute positioning, the computer system, integrated into a central site control system, may manage trajectory adaptations based on the anticipated accuracy of different positioning systems.

To this end, the proposed computer system allows for improving the control of vehicles in a confined geographical area. Moreover, the proposed computer system may contribute to a more sustainable and cost-effective utilization of vehicle fleets in confined geographical areas.

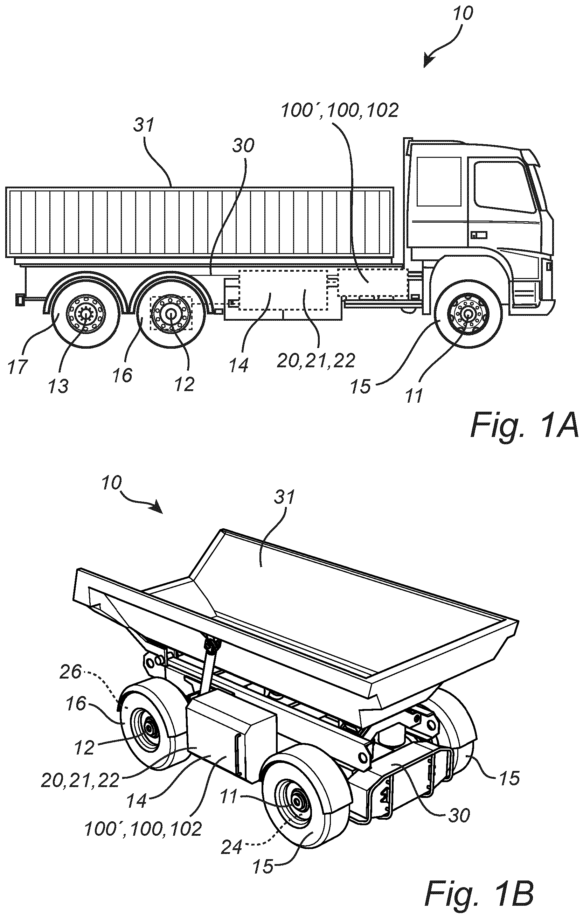

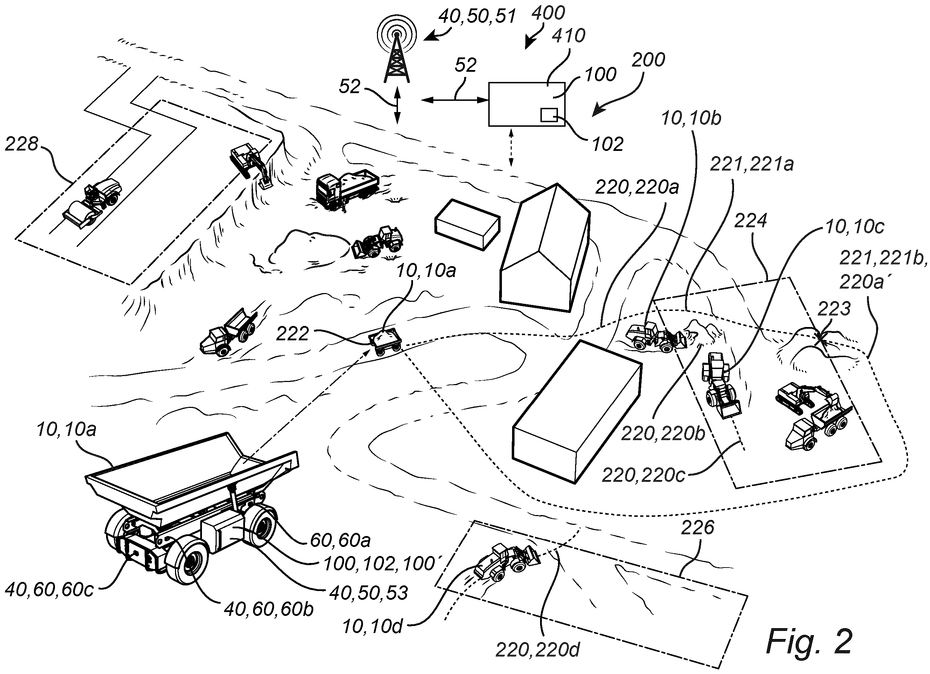

Examples of such computer systems and vehicles will now be described in relation to FIGS. 1A to 1B, in combination with FIGS. 2 to 5.

In FIG. 1A, there is illustrated one example of a vehicle 10. The vehicle 10 is here a heavy-duty vehicle, such as a truck. While the vehicle 10 in FIG. 1A is illustrated as a truck, the vehicle 10 may be of any type of vehicle suitable for transporting people and/or goods, such as bulk material from one location to another. For example, the vehicle may be an excavator, loader, articulated hauler, dump truck, truck or any other suitable vehicle known in the art. In some examples, the vehicle 10 may be driven by an operator. The vehicle 10 is an autonomous vehicle. Hence, the vehicle 10 is an autonomous heavy-duty vehicle. Such vehicle 10 may be controlled by a vehicle motion management (VMM) unit configured to individually control one or more vehicle units, one or more vehicle axles, and one or more wheels of the vehicle. For ease of reference, the autonomous heavy-duty vehicle will be denoted simply as the vehicle.

In FIG. 1A, the vehicle 10 is also an electric vehicle. Accordingly, the vehicle 10 is an autonomous electric vehicle. The vehicle 10 comprises a powertrain system 14. The powertrain system 14 comprises a propulsion unit 20. The propulsion unit may be provided by one or more electrical machines. In other types of arrangement, the propulsion unit 20 may include a traction-supporting internal combustion engine. The propulsion unit is 20 typically an energy converting unit configured to provide a torque. In this example, the propulsion unit 20 is an electric machine.

The electric machine 20 is further powered by a battery system and/or a fuel cell system. Hence, the powertrain system 14 here also comprises any one of a battery system 21 and a fuel cell system 22. In other words, the powertrain system 14 is an electric powertrain system and the vehicle 10 is a fully electrical vehicle. However, in some examples, the vehicle 10 may also include a supporting internal combustion.

Accordingly, the powertrain system 14 in FIG. 1A comprises at least one propulsion unit in the form of one or more electric machines 20, the battery system 21 and the fuel cell system 22.

The powertrain system 14 is configured to provide traction power for the vehicle 10. The traction power is delivered to one or more ground engaging members 15, 16, 17, e.g. one or more wheels of the vehicle 10. By way of examples, the traction power is delivered to the wheels, such as the wheels 15 by any one of the battery system 21 and the fuel cell system 22 in cooperation with one or more electric machines 20.

Electric machines 20 are responsible for converting electrical energy from the battery system 21 or fuel cell system 22 into mechanical power to drive the vehicle's wheels. The electric machine 20 is thus configured to provide traction power to the vehicle 10. The electric machine 20 is configured to be connected to the battery system 21 and the fuel cell system 22. It should be noted that the powertrain system 14 may be provided with a plurality of electric machines 20.

The powertrain system 14 may further comprise additional components as is readily known in the field of electrical propulsions systems, such as a transmission for transmitting a rotational movement from the electric machine(s) to a propulsion shaft, sometimes denoted as the drive shaft (not shown). The propulsion shaft connects the transmission to the wheels. Some vehicles may use a traditional multi-speed transmission, while others employ single-speed transmissions or direct-drive configurations for simplicity and efficiency. Furthermore, although not shown, the electrical machine 20 is typically coupled to the transmission by a clutch. The electric machine 20 is arranged to receive electric power from any one of the battery system and the fuel cell system. The electric machine 20 is here also arranged specifically as a traction electric machine for the vehicle. The traction electric machine is configured to provide traction power to the vehicle 10.

Moreover, as illustrated in FIG. 1A, the vehicle 10 comprises a chassis 30 and a load carrying container 31 connected to the chassis 30. The chassis 30 is configured to support the load carrying container 31. The load carrying container 31 is configured to carry materials, such as mining shovel or the like.

As depicted in FIG. 1A, the vehicle 10 is supported by wheels 15, 16, 17, where each wheel comprises a tire. The vehicle 10 comprises multiple axles, including a front axle 11 and a number of rear axles 12, 13. The front axle 11 is here considered as a first wheel axle. Moreover, one of the rear axles, such as the rear axle 12, is considered as the second wheel axle. The tractor unit has front wheels 15 which are normally steered, and rear wheels 16, 17 of which at least one pair are driven wheels. Any one of the front axle 11 and the rear axles 12, 13 may be configured to be driven by the powertrain system 14. In some examples, only the front axle is driven by the powertrain system 14. In other examples, only one of the rear axles, such as the rear axle 12, is driven by the powertrain system 14. In yet other examples, all axles 11, 12, 13 are driven by the powertrain system 14.

FIG. 1B schematically illustrates another example of an autonomous electric vehicle 10. The vehicle 10 of FIG. 1B is a load carrying vehicle in the form of a hauler. The load carrying vehicle 10 comprises the chassis 30, the load carrying container 31 connected to the chassis 30, and a plurality of wheels 15, 16. The vehicle 10 of FIG. 1B further comprises the front axle 11. The front axle 11 is provided with the pair of wheels 15. Moreover, the vehicle 10 of FIG. 1B comprises the rear axle 12. The rear axle 12 is provided with the corresponding set of pair of wheels 16. The vehicle 10 of FIG. 1B is also an example of an autonomous electric vehicle comprising front wheel and rear wheel steering. Hence, the vehicle 10 here comprises a front wheel steering device 24 and a rear wheel steering device 26. Each one of the front wheel steering device 24 and the rear wheel steering device 26 is configured to control steering of the respective axle and its corresponding wheels. Each one of the front wheel steering device 24 and the rear wheel steering device 26 is connected to a computer system of the vehicle 10, which here is a sub-computer system 100' of the computer system 100 for a number of vehicles withing a confined geographical area. Hence, the computer system 100, and/or the sub-computer system 100', may be configured to control steering of the front axle 11 and the rear axle 12. The steering of the front axle 11 and the rear axle 12 can be performed either individually, or in combination. As such, the computer system 100, and/or the sub-computer system 100', may be configured to control steering of the front axle 11 and the rear axle 12 by means of the front wheel steering device 24 and the rear wheel steering device 26, respectively. Such steering is automatically controlled by the computer system 100, as is commonly known within the field of autonomous vehicles.

The vehicles 10 in FIGS. 1A and 1b further comprise one or more brakes, which are provided e.g. in the form of one or more service brakes. The first (left) and second (right) driven wheels are typically arranged to be braked by respective first and second service brakes. Each one of the service brakes may, e.g., be a pneumatically actuated disc brake or drum brake. The wheel service brakes are controlled by corresponding brake controllers (not illustrated). Each one of the wheel brake controllers is here communicatively coupled to the computer system 100, allowing the computer system 100 to communicate with the brake controllers, and thereby control vehicle braking. These parts of the powertrain system 14 are conventional parts in an electric powertrain system, and thus not further described herein.

The computer system 100, and/or the sub-computer system 100', may also be configured to control the transfer of torque from the electric machine 20, i.e. from the powertrain system 14, to the wheels, such as the front wheels 15. The computer system 100, and/or the sub-computer system 100', may also be configured to control the transfer of torque from the electric machine 20, i.e. from the powertrain system 14, to plurality of set of wheel, such as the front wheels 15 and the rear wheels 16. By way of example, the computer system 100, and/or the sub-computer system 100', may be configured to feed torque transfer command to the electric machine 20 to transfer torque to the wheels via the driven axle(s) of the vehicle 10.

The autonomous vehicle 10 of any one of FIGS. 1A to 1B may be configured to autonomously navigate in a confined geographical area 200 as illustrated in FIG. 2. The vehicles 10 are controlled by the computer system 100, typically in combination with respective sub-computer system 100' of the vehicles 10. By way of example, the vehicles 10 in the confined geographical area 200 are controlled along one or more vehicle pathways 220 in the form of routes comprising a set of route segments, as illustrated in e.g. FIG. 2. To navigate within the confined geographical area 200 and along the route, the vehicle 10 needs to know its location with respect to the route. To locate the vehicle 10 with respect to the route, a localization service may be used. In this example, the computer system 100, and/or the sub-computer system 100', is configured to be in communication with a vehicle positioning system arrangement 40 configured to determine the position of a vehicle in the confined geographical area 200. Typically, a position of each one of the vehicles 10 in the confined geographical area 200 can be determined from the vehicle positioning system arrangement 40. By way of example, each vehicle 10 comprises one or more parts of the vehicle positioning system arrangement 40. In one example, the vehicle positioning system arrangement 40 comprises a primary positioning system, such as an absolute positioning system 50, and a secondary positioning system, such as a relative positioning system 50, which are illustrated in e.g. FIG. 2. Although various types of vehicle positioning system arrangements 40 may be provided, the following examples will be described in relation to an arrangement 40 in which the primary positioning system is implemented as the absolute positioning system 50 of the vehicle 10, and the secondary positioning system is implemented as the relative positioning system 60 of the vehicle 10.

The absolute positioning system 50 is configured to determine a geographic location of the vehicle 10 in the confined geographical area 200. The absolute positioning system 50 is configured to determine the geographic location based on a global reference frame, typically latitude, longitude, and sometimes altitude. One example of an absolute positioning system is the Global Navigation Satellite System (GNSS). The GNSS is configured to find the location of the vehicle 10 based on communication with satellites. The GNSS may for example be GPS or any other alternatives, e.g. BeiDou, Galileo, GLONASS, or any other suitable satellite positioning system. GPS utilizes a constellation of satellites orbiting the Earth to provide location information to receivers on the ground.

The absolute positioning system 50 typically comprises one or more satellites, an antenna 51, a signal receiver 53, such as a GPS receiver, arranged in the vehicle 10, and a communication link 52 configured to transfer positioning data streams (positioning signal) between the antenna 51, the signal receiver 53, the sub-computer system 100', and the computer system 100.

Moreover, the absolute positioning system 50 is a wireless communication system, which may comprise any suitable wireless device configured to communicate with any number of suitable network entities in a wireless network forming the communication link 52. Based on a signal from the wireless device, such as the GPS receiver 50, the network entities may be able to triangulate the position of the wireless device, and thereby also locate the vehicle 10, and report the location back to the wireless device. Any other suitable methodology for locating the vehicle 10 with the use of the wireless network may also apply. For example, this may be any suitable telecommunications positioning methodology, e.g. by using ultra-wide band positioning and triangulation.

Moreover, while GNSS may typically represent the most appropriate technology for the computer system 100, and/or the sub-computer system 100', it may also be possible to incorporate RTK (Real-Time Kinematic) to enhance the GNSS system by providing real-time corrections, thereby improving positioning accuracy. Furthermore, the feasibility of employing an absolute positioning system utilizing lidar technology in conjunction with a pre-recorded map may also be conceivable. Such map could be developed using a SLAM (Simultaneous Localization and Mapping) algorithm.

Further, the autonomous vehicle 10 comprises the relative positioning system 60, as depicted in e.g. FIG. 2. The relative positioning system 60 is configured to determine a position of the vehicle 10 in relation to other objects, such as other vehicles, other zones, and/or points of reference (without necessarily knowing its exact geographic coordinates). As such, the relative positioning system 60 is configured to determine a position of the vehicle 10 relative to other objects, such as other vehicles, geographical zones and/or points of reference, in the confined geographical area 200. It should be noted that the vehicle position relative to the other vehicle(s) refers to an estimated location of the vehicle, as described herein. Thus, the estimated position may not always be a single precise point but rather a region within which the vehicle is likely located.

In one example, the relative positioning system 60 is configured to determine the relative position of the vehicle 10 over time based on odometry data. Accordingly, the relative positioning system 60 here comprises one or more odometry acquiring devices. The odometry data contains any one of vehicle speed data, vehicle acceleration data, turning rate data, wheel rotation data, vehicle orientation data, and relative distance traveled data. By way of example, the relative positioning system 60 comprises any one of an inertial measurement unit, lidar, radar, ultrasonic sensor, mono camera, stereo camera, wheel speed sensor, steering angle sensor, and gyroscope. Typically, the relative positioning system 60 comprises plurality of units and sensors, such as a set of sensors including lidar, radar, camera, and ultrasonic sensors. In this manner, the relative positioning system 60 is configured to measure the distance and angle between the vehicle 10 and surrounding objects, allowing the vehicle to navigate its environment, avoid obstacles, and maintain a safe distance from other vehicles. Any sensor in the set of sensors may be mounted at any suitable location of the autonomous vehicle 10. In one example, the set of sensors comprises at least one 2D Lidar sensor 60a, at least one 3D Lidar sensor 60b, at least one camera unit 60c, or any other suitable sensor. In some examples, the at least one 2D Lidar sensor may be arranged on multiple or all sides of the autonomous vehicle 10, e.g. such that the at least one 2D Lidar sensor is capable of scanning all surroundings of the autonomous vehicle 10. The at least one 3D Lidar sensor may be arranged on the roof of the autonomous vehicle 10 to be able to scan 360 degrees around the autonomous vehicle 10. The at least one camera unit may comprise one or more different types of camera units arranged in one or more places of the autonomous vehicle 10. The at least one camera unit may comprise a Red, Green, Blue and Depth (RGBD) sensor camera unit which can record the surroundings and account for depth. The at least one camera unit may additionally, or alternatively, comprise any one of one or more infrared cameras, heat cameras, stereo cameras. It should be noted that the relative positioning system 60 is typically also configured to be in communication with the absolute positioning system 50.

The relative positioning system 50 has a lower accuracy than the absolute position data from the absolute positioning system 60.

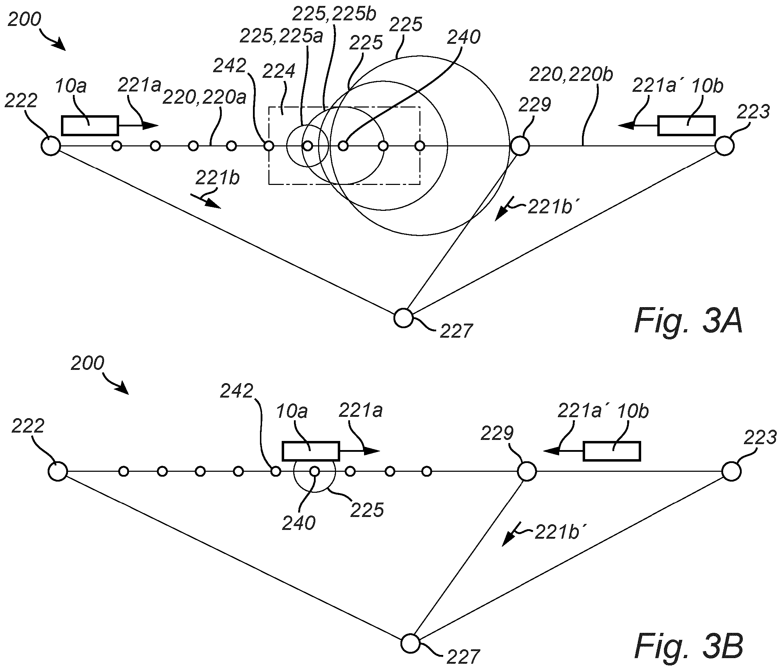

One example of a system 400 comprising the computer system 100 will now be further described with reference to FIG. 2 in conjunction with FIGS. 3A and 3B, which illustrate examples of the operations of multiple vehicles 10 within the confined geographical area 200, utilizing their respective relative positioning systems 60 and absolute positioning systems 50.

FIG. 2 further illustrates the computer system 100. The computer system 100 is configured for trajectory planning of the vehicles 10, such as the vehicles 10a to 10d. While the following example is described in relation to a control of a single vehicle 10, i.e. the vehicle 10a, the computer system 100 is typically configured to control the other vehicles 10b to 10d in similar fashion. For ease of reference, however, an example of the disclosure is described in relation to a control of the vehicle 10a. The configuration of the computer system 100 is typically limited for trajectory planning of the vehicles 10 operating within the confined geographical area 200. The computer system 100 is also configured to control the one or more vehicles 10 according to their respective trajectories.

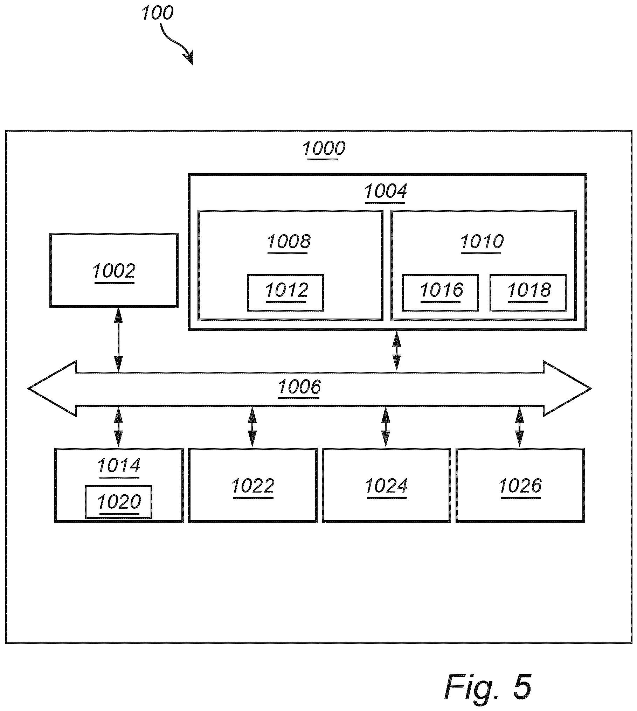

As further illustrated, the computer system 100 comprises processing circuitry 102. The processing circuitry 102 is configured to control one or more vehicles 10, as described herein. The computer system 100 may also comprise a memory and a system bus (although not illustrated). These components and further optional technical details of the computer system 100 are described in relation to FIG. 5.

The computer system 100 is here an integral part of a centralized site control system 410 for the confined geographical area 200. Hence, the computer system 100 is a part of a remote server, such as the central control system 410, as shown in FIG. 2. The computer system 100 is configured to be in communication with one or more sub-computer systems 100' of the vehicles 10. The sub-computer systems 100' may typically include corresponding processing circuitry. The sub-computer systems 100' may typically also include similar hardware and software as described in relation to the computer system 100.

Hence, in some examples, there is provided a system 400 comprising the central control system 410 including the computer system 100 and further a number of vehicles 10, each one of the vehicles having a sub-computer system 100'. In addition, the computer system 100 of the central control system 410 is configured to be in communication with the sub-computer systems 100' of the vehicles 10, allowing the computer system 100 to control each vehicle 10 according to the methods and configuration of the processing circuitry 102.

As mentioned herein, the processing circuitry 102 is in communication with the vehicle positioning system arrangements 40 of the vehicles 10. In this example, the vehicle positioning system arrangement 40 comprises the absolute positioning system 50 and the relative positioning system 60. The absolute positioning system 50 is here the primary positioning system. The absolute positioning system 50 is provided in the form of a global navigation satellite system GNSS. The relative positioning system 60 is here the secondary positioning system. The secondary positioning system comprises one or more odometry data acquiring units, such as an inertial measurement unit IMU, lidar, odometry, radar, ultrasonic sensor, mono camera, stereo camera, wheel speed sensor, steering angle sensor, and gyroscope. Such units typically rely on relative positioning data. Accordingly, the secondary positioning system is configured to rely on relative positioning. For these reasons, the processing circuitry 102 is configured to account for uncertainty associated with the secondary positioning system by assuming a reduced safe distance between adjacent vehicles to prevent collisions.

Typically, the positioning of the vehicle 10 within the confined area 200 is controlled by means of the absolute positioning system 50 and the relative positioning system 60 in cooperation with the computer system 100, and further in cooperation with the other components of the powertrain system 14, such as the propulsion unit (e.g. the electric machine 20) and the steering device(s).

Turning to again to FIG. 2, there is illustrated a number of vehicles 10, including the autonomous heavy-duty vehicles 10a to 10d, operating within the confined geographical area 200. In FIG. 2, the vehicles 10 are autonomous heavy-duty vehicles, particularly autonomous heavy-duty electric vehicles. For ease of reference, the autonomous heavy-duty vehicles will be denoted simply as vehicles 10. Moreover, although the disclosure of FIG. 2 may only focus on a few vehicles, such as vehicles 10a to 10d, the methods and configurations of the computer system 100 can apply to any numbers of vehicles 10a to 10n. In FIG. 2, the confined geographical area 200 corresponds to a quarry area. The confined geographical area 200 can be defined in several different manners, as is commonly known in the art.

By way of example, defining the confined geographical area 200 for autonomous vehicles 10 here involves specifying the boundaries and parameters within which these vehicles are authorized to operate. The definition of the confined geographical area 200 often includes considerations for geographic limits and operational boundaries for the vehicle(s) 10. More specifically, the confined geographical area 200 for autonomous vehicles 10 is defined by any one of geographic coordinates, which specifies the geographical coordinates (latitude and longitude) that define the boundaries of the area, physical landmarks, which identifies physical landmarks or boundaries that set the edges of the confined area, and digital mapping, which utilizes digital mapping technologies to create a virtual boundary for the confined area. GPS-based mapping systems can e.g. be employed to create a geofence, a virtual perimeter that the autonomous vehicles 10 should not cross. Triangulation and/or RFID (Radio-Frequency Identification) may also be used to further create a virtual boundary.

The definition of the confined geographical area 200 may also be based on operational boundaries, which specify operational restricting within the confined geographical area 200. The operational restricting may include speed limits, specific routes, or areas where certain vehicle behaviors are restricted or encouraged. The definition of the confined geographical area 200 may also be based on environmental conditions (e.g. weather conditions, lighting, or specific road surfaces). The definition of the confined geographical area 200 may also be based on legal and regulatory framework and various safety measures.

Also, in order to allow for communication between the vehicles 10, the confined geographical area 200 may generally include a communication protocols so as to establish communication protocols between the vehicles 10 and a central control system 410, or infrastructure within the confined geographical area 200. In this manner, the vehicles 10 can be monitored in real-time and further coordinated in relation to each other. In FIG. 2, the computer system 100 is an integral part of the central control system 410. The central control system 410 may in some examples include, or be an integral part of a server, such as a cloud server.

The vehicles 10 are controlled in an autonomous manner so as to carry out several different transportation missions within the quarry area. As mentioned above, the vehicles 10 are operating along one or more vehicle pathways 220. For example, the vehicles 10a, 10b, 10c and 10d are operating along the respective vehicle pathways 220a, 220b, 220c, and 220d, as illustrated in FIG. 2. In one example, the vehicle 10a is controlled to transport material along a vehicle pathway 220a, from a first starting position 222 (also denoted as starting location, starting point, or the like), such as a loading zone, to a second destination position 223 (also denoted as destination location, destination point, or the like), such as an unloading zone. In addition, or alternatively, another vehicle 10b is controlled to perform one or more quarrying operations, including e.g. removal of material from the earth's surface, along a corresponding vehicle pathway 220b. The materials may e.g. be rock, sand, gravel, limestone, or other minerals.

The vehicle pathway 220 may be defined by the road, including one or more road segments. Typically, the vehicle pathway 220 corresponds to an intended route for the transport (transport mission). In other words, the computer system 100 typically receives transport mission characteristic(s) about the upcoming transport mission, which here includes route data about the intended route. The intended route for the vehicle 10 thus refers to the pathway of the vehicle 10 for performing the transport mission. The vehicle pathway 220 may in some examples correspond to a trajectory (course) that the vehicle 10 is planned to take to perform the transport mission. In other examples, the vehicle pathway 220 is one component of the trajectory. The vehicle pathway 220 typically encompasses the physical route traveled and to be travelled by a vehicle 10, as illustrated in FIG. 2. The route, or intended route, typically refers to a predetermined course for the vehicle 10 to operate from one place to another, e.g. from 222 to 223 along the vehicle pathway 220. The route can include a series of directions or instructions indicating the specific roads or paths to take along the vehicle pathway 220 to reach the destination 223. A trajectory 221 typically refers to a defined path along which a vehicle 10 moves within the confined geographical area 200. The trajectory 221 may be determined and adapted based on positioning data, transmission data, available vehicle pathways, vehicle dynamics, and operational constraints.

Typically, the processing circuitry 102 is also configured to receive travel mission data for the vehicle 10a. In this example, the processing circuitry 102 also receives travel mission data for the other vehicles 10b to 10d within the confined geographical area 200. As such, the computer system 100 receives travel mission data for a plurality of vehicles 10, and typically for all vehicles 10 within the confined geographical area 200. The travel mission data comprises data about intended routes for completing one or more transport missions, such as travel mission data for the vehicle 10a for completing its transport mission along the vehicle path 220a to the destination 223. To this end, the processing circuitry 102 obtains transport mission characteristic(s) for an upcoming transport mission for the vehicle 10a.

The travel mission data can be varied for different types of vehicles 10. By way of example, the travel mission data can contain data indicative of a transportation to transport materials and/or goods from the point 222 (position / location) to the point 223 (position / location) along a planned route, here corresponding to the vehicle path 220a, see e.g. FIG. 2. In other words, the transport should be performed by the vehicle 10a from a geographical starting point (first position) to a geographical destination (second position). The transport may typically be performed along a route, including one or more road segments and/or roads. Hence, the vehicle pathway 220, 220a is here a road. Other examples are also possible, such as transportation of people. The transportation may also include an iterative transportation of materials along a certain route. The processing circuitry 102 is typically configured to determine transport mission characteristic(s) for the upcoming transport mission for the vehicle 10 based on the received transport mission data. The travel mission data can be provided in several different manners to the processing circuitry 102. In addition, the travel mission data may contain several different types of data. By way of example, the travel mission data for an upcoming transport mission for the vehicle 10 comprises transport mission data indicative of at least the destination location 223 and a destination time. The destination time refers to a point in time for the vehicle 10a to arrive at the destination point 223.

In an extended example, the travel mission data further contains transport mission duration data, distance to be traveled and similar transport mission data. The transport mission data may also contain a speed restriction profile for the transport mission, a minimum speed profile for the transport mission, desired or required speed for different segments of the transport mission.

To sum up, trajectories 221 of the vehicles 10 are typically determined from data of the vehicle paths and the transport missions, including the destinations for the transport missions of the vehicles 10. In one example, the trajectories 221 for the vehicles 10 are determined by the processing circuitry 102 using received transport mission data. Accordingly, trajectory determination may be considered part of the transport mission data. It may also rely on a predefined map containing possible trajectories, with the transport mission data selecting the appropriate trajectory. Such an approach is typically used when a hauling route remains unchanged over time, in which case the route is predetermined within the map. However, at intersections or decision points, the trajectory may be determined dynamically based on the mission data. A similar approach may apply to speed profiles, where a predefined maximum speed is set, but the actual driving trajectory is determined dynamically using mission data.

In addition, or alternatively, the processing circuitry 102 is configured to obtain topology data from a number of data sources, such as digital maps, GPS data, or geographic information system (GIS) databases. These sources may generally include relevant information about the road network, including roads, elevation data, inclination data, and potential destinations. In one example, the topology data is received by the processing circuitry 102 from a route planner system of the computer system 100. Topology data may also be received from the vehicles 10. In other examples, the topology data is obtained from previous transport missions along the planned route.

In addition, or alternatively, the topology data of the intended route for the transport mission may comprise relevant data for determining the route profile of the vehicle pathway 220, including elevation changes, inclination and inclination changes, road grade, and terrain type (urban, highway, off-road, etc.).

The processing circuitry 102 is typically configured to obtain real-time absolute positioning data from the vehicles 10 within the confined geographical area 200.

Moreover, the processing circuitry 102 is configured to determine one or more geographical zones 224, 226, 228 within the confined geographical area 200 where the vehicle positioning system arrangement 40 is anticipated to experience reduced positioning reliability or accuracy. For example, one or more vehicles 10 may occasionally experience driving conditions resulting in a loss of positioning detecting via the absolute positioning system 50 due to different factors such as signal blocking etc. In other situations, the confidence in the absolute positioning data may be too low for detecting the position of the vehicle 10 along the vehicle pathway 220. By way of example, tunnels, buildings and hilly terrains within the confined geographical area 200 may introduce complexities and disturbances in navigation, potential affecting the operation performance of the vehicles 10.

To this end, the vehicles 10 may experience unpredictable losses of positioning, which can adversely affect communication between a specific vehicle 10, such as vehicle 10a, and the computer system 100, between multiple vehicles 10 and the computer system 100, as well as between one vehicle 10, such as vehicle 10a, and any adjacent vehicles, such as vehicles 10b to 10d.

The loss of positioning within the confined geographical area 200 may result in that one or more vehicles 10 collide within the confined geographical area 200.

In this example, the processing circuitry 102 is configured to determine the one or more geographical zones 224, 226, 228 in advance of the subsequent control of the vehicles 10 in the confined geographical area 200.

By way of example, the processing circuitry 102 is configured to determine the one or more geographical zones 224, 226, 228 based on data indicative of predetermined one or more geographical zones that are stored in a database accessible to the processing circuitry 102. The geographical zones 224, 226, 228 can be determined in advance by the processing circuitry 102 in several different manners and based on several different types of data. By defining and storing preidentified risk geographical zones, the processing circuitry 102 allows for predictive trajectory adjustments.

In one example, the processing circuitry 102 is configured to determine the one or more geographical zones 224, 226, 228 based on data collected during operation of the one or more vehicles 10 in the confined geographical area 200.

In addition, or alternatively, the data comprises diagnostics data from the one or more vehicle positioning system arrangements 40 of the one or more vehicles 10.

In one example, the processing circuitry 102 is configured to determine the one or more geographical zones 224, 226, 228 from data indicative of any one of a physical characteristic and an environmental condition of the confined geographical area that may negatively impact the performance of the vehicle positioning system arrangements 40 of the vehicles 10.

By way of example, the data indicative of one or more geographical zones 224, 226, 228 is received from topographical data sources that highlight areas where disturbances, such as tunnels or buildings, may cause reduced positioning system accuracy due to signal interference or blockages.

In one example, the data indicative of one or more geographical zones 224, 226, 228 is received from topographical data sources that highlight areas where terrain irregularities (e.g., hills, mountain ranges, or valleys) may cause reduced positioning system accuracy due to signal interference or blockages.

In one example, the data indicative of one or more geographical zones 224, 226, 228 is received from a database of environmental conditions identifying areas with potential localization challenges due to weather patterns such as heavy rainfall, snow, or fog that may affect the performance of sensors.

In one example, the processing circuitry 102 is configured to determine the one or more geographical zones 224, 226, 228 from data indicative of areas where there are no structural features, or dynamic changes of structural features, for the lidar map localization to detect.

Positioning reliability typically refers to the ability of the absolute positioning system 50 to provide continuous and stable position updates over time. Positioning accuracy typically refers to the deviation of the estimated position of a vehicle 10 from the actual position of the vehicle 10, as determined from absolute positioning data. One reason for reduced positioning reliability or accuracy is that the absolute positioning data is of low confidence, or the absence of absolute positioning data, i.e. that the processing circuitry 102 receives no absolute positioning data.

Accordingly, the processing circuitry 102 is here configured to determine that absolute positioning data of the vehicle 10a and the vehicle 10b within the confined geographical area 200 is of low confidence. In other examples, the processing circuitry 102 is configured to determine that absolute positioning data of the vehicle 10a and the vehicle 10b within the confined geographical area 200 is absent. The absolute positioning data is typically received from the absolute positioning system 50.

Moreover, the processing circuitry 102 is configured to determine positions of the vehicles 10 within the confined geographical area 200. The positions of the vehicles 10 are determined by the absolute positioning system 50 and the relative positioning system 60 in cooperation with the computer system 100. For example, the processing circuitry 102 is configured to determine absolute positions of the vehicles 10a and 10b in the confined geographical area 200 from positioning data from the absolute positioning system 50. Moreover, the processing circuitry 102 is configured to determine relative positions of the vehicles 10a and 10b in the confined geographical area 200 from data from the relative positioning system 60. As the vehicle 10b is in the geographical zone 224, the position of the vehicle 10b may be determined from a latest position of the vehicle 10b, as determined from high confidence absolute positioning data of the absolute positioning system 50, or from a combination of positioning data from the absolute positioning system 50 and the relative positioning system 60, as transferred to the computer system 100.

As illustrated in FIG, 2, the destination 223 is localized just outside the geographical zone 224, requiring the vehicle 10a to cross the geographical zone 224 upon following the vehicle pathway 220a for reaching the destination 223. In this example, the vehicle pathway 220a corresponds to a current determined trajectory 221 for the vehicle 10a. In other transport missions, the destination 223 may be localized within one of the geographical zone 224, 226, 228. In yet other examples, the transport mission may contain deliver of material to several destinations in multiple geographical zones 224, 226, 228.

Moreover, as illustrated in FIG 2, the vehicle 10b is positioned within the geographical zone 224. Accordingly, the vehicle 10b may likely experience a reduced positioning reliability or accuracy.

The processing circuitry 102 is here configured to determine that the vehicle 10b is operating in the geographical zone 224 based on the determined position of the vehicle 10b and data indicative of the position of the geographical zone 224 within the confined geographical area 200. Moreover, the processing circuitry 102 is here configured to determine that the vehicle 10b is operating in the geographical zone 224 with anticipated reduced positioning reliability or accuracy. It should be noted that although the example in FIG. 2 illustrates a vehicle 10b operating within the in the geographical zone 224, the processing circuitry 102 may likewise determine that a vehicle 10 may be expected to operate within the geographical zone 224 in a near future. Such configuration is possible due to that the processing circuitry 102 comprises data indicative of the locations of the geographical zone 224, 226, 228 in the confined geographical area 200 as well as the positions of the vehicles 10 in the confined geographical area 200. As such, the processing circuitry 102 is configured to determine, based on the one or more geographical zones 224, 226, 228 and the positions of the vehicles 10, that at least one vehicle 10b is anticipated to operate, or is operating in the geographical zone 224 with anticipated reduced positioning reliability or accuracy.

In addition, the processing circuitry 102 is configured to adapt the trajectory 221 of the vehicle 10a in response to the determination that the vehicle 10b is operating in the geographical zone 224. In particular, the processing circuitry 102 is configured to adapt the trajectory 221 of the vehicle 10a in response to the determination that the vehicle 10b is operating in the geographical zone 224, so as to avoid that the vehicle 10a is approaching the vehicle 10b. More specifically, the processing circuitry 102 is configured to adapt the trajectory 221 of the vehicle 10a in response to the determination that the vehicle 10b is operating in the geographical zone 224 and with anticipated reduced positioning reliability or accuracy.

In another example, the processing circuitry 102 is configured to adapt the trajectory 221 of the vehicle 10a in response to the determination that the vehicle 10b is anticipated to operate in the geographical zone 224. In particular, the processing circuitry 102 is configured to adapt the trajectory 221 of the vehicle 10a in response to the determination that the vehicle 10b is anticipated to operate in the geographical zone 224, so as to avoid that the vehicle 10a is approaching the vehicle 10b. More specifically, the processing circuitry 102 is configured to adapt the trajectory 221 of the vehicle 10a in response to the determination that the vehicle 10b is anticipated to operate in the geographical zone 224 and with anticipated reduced positioning reliability or accuracy.

The adaptations are executed by the processing circuitry 102 to facilitate a more productive, safe and efficient navigation by modifying the trajectory 221 of at least one vehicle 10a in response to the presence of at least one vehicle 10b in a geographical zone 200 where reduced positioning reliability or accuracy is anticipated.

Hereby, the computer system 100 reduces the likelihood of collisions and operational inefficiencies by proactively managing vehicle interactions in geographical zones with degraded localization accuracy. By implementing trajectory adjustments, the computer system 100 also enables continuous operation despite degraded absolute positioning data, thereby reducing vehicle downtime and improving fleet productivity. By proactively managing high-risk localization zones, i.e. the geographical zones 224, 226, 228, the computer system 100 minimize, or at least reduce unnecessary stops and delays while ensuring that vehicles 10, such as vehicle 10b, experiencing degraded positioning remain separated from other vehicles, such as vehicle 10a, thereby reducing the risk of collisions and maintaining operational efficiency.

Moreover, the computer system 100 may support mission-prioritized trajectory planning, allowing for more efficient site operations with reduced impact on productivity, even in cases where localization challenges arise. The computer system 100 further allows for improving traffic flow efficiency, as trajectory adaptations can be prioritized based on mission data and site-level coordination, ensuring continuous vehicle operation with reduced disruption.

Typically, the processing circuitry 102 is configured adapt multiple trajectories of multiple vehicles 10 in response to the determination that the vehicle 10b is anticipated to operate, or is operating in the geographical zone 224, so as to avoid that one or more vehicles may approach the vehicle 10b.

For example, the processing circuitry 102 is configured to perform a trajectory planning of vehicles 10, including determination and adaptation of movement paths (vehicle pathways) for several heavy-duty vehicles 10 within the confined geographical area 200. Such adaptations of trajectories may involve re-routing one or more vehicles 10 to avoid the geographical zone 224 with reduced positioning accuracy, adjusting speed of the vehicles 10, stopping or yielding the vehicles 10, increasing following distances between two vehicles 10, modifying trajectories of one or more vehicles 10 incrementally, altering right-of-way priorities for the vehicles 10, and/or employing alternative localization methods for the vehicles 10.

In one example, the processing circuitry 102 is further configured to adapt one or more trajectories of one or more other vehicles 10 to control a number of vehicles 10 present in the geographical zone 224 at any given time. Such a configuration allows the processing circuitry 102 to ensure that only one vehicle 10b is present in the geographical zone 224 at any given time.

For example, the processing circuitry 102 is configured to adapt one or more trajectories of one or more other vehicles 10c, 10d to control that vehicles 10 around the geographical zone 224 may not enter the geographical zone 224, thereby controlling the number of vehicles 10 present in the geographical zone 224 at any given time.

In one example, the processing circuitry 102 is further configured to adapt one or more trajectories of one or more other vehicles 10 in response to the determination that at least one vehicle 10b is operating in the geographical zone 224 to control a number of vehicles 10 present in a geographical zone at any given time.

In one example, the processing circuitry 102 is further configured to adapt at least one trajectory of at least one other vehicle, such as vehicle 10c in FIG. 2, to follow a trajectory of another vehicle, such as vehicle 10d in FIG. 2. In addition, or alternatively, the processing circuitry 102 is configured to adapt the trajectory 221a of vehicle 10a to follow the trajectory of vehicle 10c. In these examples, the processing circuitry 102 determines to adapt the trajectory 221 of the vehicle 10a in response to the determination that the vehicle 10b is operating in the geographical zone 224 and with anticipated reduced positioning reliability or accuracy, and further to adapt the trajectory 221 of the vehicle 10a to another vehicle, such as vehicle 10c. The processing circuitry 102 may determine that the vehicle 10a should follow the vehicle 10c with a certain distance them-between, or to a certain position in the confined geographical area 200. In manner, the processing circuitry 102 is configured to perform traffic planning, which typically affects more than the vehicle with reduced localization and one more vehicle.

In one example, the processing circuitry 102 is configured to continuously identify new geographical zones with reduced positioning reliability or accuracy in a vehicle positioning system arrangement of any vehicle among the vehicles 10. Moreover, in such an example, the processing circuitry 102 is configured to continuously update the determination of the geographical zones with reduced positioning reliability or accuracy and store the new geographical zones in the database.

In one example, the processing circuitry 102 is configured to prioritize trajectory adaptation based on mission data for the vehicles 10.

Some examples of the operations of the computer system 100 will now be described in relation to FIG. 2 in conjunction with FIGS. 3A and 3B. FIGS. 3A and 3B illustrate enlarged views of the vehicles 10a and 10b in the confined geographical area 200 of FIG. 2. In FIGS. 3A and 3B, the vehicle 10b is here of a similar type of vehicle 10 as the vehicle 10a. Other types of vehicles 10 are likewise conceivable. FIG. 3A illustrates an example in which the processing circuitry 102 is configured to perform the above operations in a proactive manner, also denoted as a proactive method, a proactive configuration or the like. As shown in FIG. 3A, the vehicle 10a is assigned a trajectory 221a from a first location (starting location) 222 to a second location (destination location) 223, while the vehicle 10b is assigned a trajectory 221a' from location 223 to location 222. In this example, the computer system 100 has prior knowledge of the predefined geographical zone 224, where the respective vehicle positioning system arrangement 40 of the respective vehicles 10a and 10b is anticipated to experience reduced positioning reliability or accuracy. When a vehicle 10, such as vehicle 10a, enters the geographical zone 224, positioning uncertainty increases and continues to grow over time as long as the vehicle 10a remains in an area of the geographical zone 224 with reduced positioning reliability or accuracy. In FIG. 3A, this is illustrated by a position boundary zones 225, where a first position boundary zone 225a defines a region in which the vehicle is known to be with certainty, and a second position boundary zone 225b represents a region of increasing uncertainty. Additionally, the processing circuitry 102 may generate a best-estimated position 240 based on data from the secondary positioning system 60, such as an inertial measurement unit (IMU), lidar, odometry, radar, or stereo cameras. In this case, the estimated position 240 of the vehicle 10a follows the planned trajectory 221a, but the computer system 100 cannot confirm its accuracy with certainty. The positioning uncertainty may increase to such an extent that it is no longer possible to determine whether the vehicle 10a remains inside the predefined geographical zone 224. While it is likely that the vehicle 10a will regain high-confidence positioning data upon exiting the predefined geographical zone 224, there is no guarantee that absolute positioning data will be immediately available.

The configuration of the processing circuitry 102, as described herein in relation to e.g. FIG. 2, enables the computer system 100 to plan trajectory adaptations in advance. Instead of allowing both vehicle 10a and vehicle 10b to follow the shortest path 220, 220a, 220b through the predefined geographical zone 224, the computer system 100 determines an alternative trajectory 221b, 221b' for at least one of the vehicles 10a and 10b. For example, the computer system 100 may allow vehicle 10a to proceed on the direct route to location 230 while modifying the trajectory 221a' of vehicle 10b to the alternative trajectory 221b'. The adaptation may involve re-routing vehicle 10b at location 229 via an alternative route (e.g., via 227) to location 222, or reducing the speed of vehicle 10b so that vehicle 10a has sufficient time to exit the predefined geographical zone 224 before vehicle 10b reaches the affected area of the predefined geographical zone 224. The trajectory planning typically occurs before vehicle 10a enters the predefined geographical zone 224 to ensure safe and efficient vehicle operation within the confined geographical area 200. The trajectory planning may also occur when the vehicle 10a is in the predefined geographical zone 224.

To further enhance trajectory planning, the processing circuitry 102 may determine the one or more geographical zones 224, 226, 228 based on e.g. stored predetermined data and real-time operational data collected from the vehicles 10, as mentioned in relation to the examples of FIG. 2. The collected data may include diagnostics data from the vehicle positioning system arrangement 40, 50, 60, data indicative of physical characteristics, data indicative of environmental conditions that could impact positioning reliability or accuracy, etc. Examples of such environmental conditions may include tunnels, large metallic structures, or areas with significant multi-path interference.

Furthermore, the processing circuitry 102 may adapt vehicle trajectories 221 to control the number of vehicles 10 within the predefined geographical zone 224 at any given time. For example, the computer system 100 may restrict additional vehicles 10 from entering the predefined geographical zone 224 where another vehicle is already operating with reduced positioning reliability. This prevents congestion and ensures that the vehicle experiencing degraded positioning has enough space to operate safely without interference.

It should be noted that the processing circuitry 102 may typically be configured to determine that absolute positioning data of both vehicle 10a and vehicle 10b is of low confidence, or absent. Determining that the absolute positions of the vehicles 10a and 10b cannot be reliable established within the confined geographical area 200 here comprises receiving, by the processing circuitry 102, data indicative of that vehicles 10a and 10b are subject to low confidence absolute positioning data or a lack of absolute positioning data.

In FIG. 3A, if the absolute positioning data is of low confidence, the processing circuitry 102 may typically determine the positions of the vehicle 10a and the vehicle 10b based on a previously determined positioning 242 of the vehicle 10a and the vehicle 10b. The previously determined positioning is here a positioning point in the confined geographical area 200. The previously determined positioning has been determined from reliable absolute positioning data. More specifically, the previously determined positioning has been determined from high-confidence absolute positioning data transferred from the absolute positioning system 50 to the processing circuitry 102. In this example, the previously determined positioning 242 of the vehicle 10a corresponds to the location at the entrance of the geographical zone 224, which here defines the last known vehicle position, as determined from reliable absolute positioning data. The previously determined positioning of the vehicle 10b corresponds to the position of the vehicle 10b in FIG. 3A. As such, the previously determined positioning of any one of the vehicle 10a and the vehicle 10b is determined from the latest received high-confidence positioning data from the absolute positioning system 50.

In some examples, the processing circuitry 102 also determines the boundary of the boundary zone 225 based on vehicle data. Such vehicle data can e.g. be odometry data, as exemplified herein. The increasing area between the position boundary zones 225, respectively, here represent the uncertain positions of respective vehicle 10a and 10b when their precise location data is unavailable from the absolute positioning system 50. Moreover, it should be noted that the areas of the position boundary zone 225 will typically expand over time to reflect growing uncertainty about the positions of the vehicles 10a and 10b.

Occasionally, the estimated distance, or the actual distance, between the two vehicles 10a and 10b will reduce to a level where there is a risk for a collision, requiring a need for performing a precautionary action by the processing circuitry 102 in response to the estimated distance, or the actual distance.

The processing circuitry 102 may also be configured to use the relative positioning system 60 for predicting progress of the vehicles 10 within the confined geographical area 200. The processing circuitry 102 may also be configured to use the relative positioning system 60 for controlling movement of the vehicles 10 in the confined geographical area 200. To this end, the relative positioning system 60 transmit data to the processing circuitry 102, meanwhile the processing circuitry 102 uses positioning data indicative of the last known position of the vehicle 10, as determined by the absolute positioning system 50.

By way of example, the processing circuitry 102 is configured to control the relative positioning system 60 to utilize the last known vehicle position as determined by the absolute positioning system 50, and further estimate whether the vehicle 10 may have reached the destination location 230 since the last known vehicle position, as determined by the absolute positioning system 50.

It should also be noted that in the above situations where absolute positioning data becomes unavailable, the stored, or determined shortest distance to the destination location 223 may also serve as a reference for the processing circuitry 102 and the vehicle(s) 10, such as the vehicle 10a. The vehicle 10 then employs the relative positioning system 60, and operates the vehicle 10 based on e.g. vehicle odometry, inertial measurement units (IMU), and/or other onboard sensor-derived data, so as to maintain a record of distance traveled since the last update.

FIG. 3B illustrates an example in which a first vehicle (vehicle 10a) is travelling toward a second vehicle (vehicle 10b) within the confined geographical area 200. During operation, the computer system 100 receives data from the vehicle positioning system arrangement 40 of vehicle 10a, typically from the absolute positioning system 50, indicating that vehicle 10a is experiencing, or is anticipated to experience, reduced positioning reliability or accuracy in any zone or region within the confined geographical area 200. In response to receiving such data, and based on the determined positions of the vehicles 10a, 10b, the computer system 100 adapts the trajectory 221a' of another vehicle (vehicle 10b) to avoid approaching vehicle 10a. For instance, the trajectory of vehicle 10b may be adapted by rerouting its trajectory via an alternative route, such as turning from location 229 to 227, thereby maintaining a sufficient separation distance from vehicle 10a. In this example, the processing circuitry 102 is configured to determine positions of the vehicles 10 within the confined geographical area 200, receive data from at least one vehicle 10a indicating that a vehicle positioning system 40, 50, 60 arrangement is experiencing, or is anticipated to experience, reduced positioning reliability or accuracy, and based on the received data, adapt one or more trajectories of one or more vehicles 10, 10b to avoid approaching the vehicle 10a experiencing, or anticipated to experience, reduced positioning reliability or accuracy. Such configuration allows for providing a reactive method to trajectory planning of vehicles 10.

It should also be noted that when low confidence in the absolute positioning data is detected, the computer system 100 typically determines to rely less on the absolute positioning data and rather use, or sometimes completely switch to, the relative positioning system 60 in determining positions of the vehicle relative to the other vehicle and/or other moving objects. Hence, in FIGS. 2, 3A and 3B, the processing circuitry 102 may be configured to determine to use the relative positioning system 60 in response to the determined low confidence in absolute positioning data from the absolute positioning system 50. In other words, when the processing circuitry 102 detects that no reliable absolute positioning data is received from the absolute positioning system 50, the processing circuitry 102 determines to use the relative positioning system 60. As such, the processing circuitry 102 may switch from the absolute positioning system 50 to the relative positioning system 60 in response to the detected low confidence in absolute positioning data. In some situations, the computer system 100 may already use both the absolute positioning system 50 and the relative positioning system 60 when the low confidence in absolute positing data is detected. In such situations the computer system 100 determines to only use the relative positioning system 60, or at least rely less on the absolute positioning system 50. Detected low confidence in the absolute positioning data is typically determined as non-reliable absolute positioning data by the processing circuitry 102. The term "low confidence in absolute positioning data", as used herein, typically refers to situations where low confidence in absolute positioning data is detected, typically occurring when the data received from, e.g., global positioning systems (GPS) or other absolute positioning systems is unreliable, inaccurate, or uncertain. This can be due to various factors affecting signal quality and accuracy. Examples of situations when low confidence in absolute positioning data may be detected are signal blockage due to tall buildings, tunnels, or natural terrain features such as mountains, which can block or reflect GPS signals, leading to poor signal quality; signal multipath (e.g., GPS signals can reflect off buildings causing delays and errors in the position data); atmospheric conditions (e.g., atmospheric disturbances can interfere with GPS signal transmission, reducing accuracy); and equipment malfunction (e.g., issues with the GPS receiver or outdated firmware can lead to inaccurate position data).

To this end, determined low confidence in the absolute positioning system 50 amounts to a situation where the absolute positioning system 50 reports no data, or reports data with low confidence, etc. Determining the level of confidence (no, low, medium, or high) in the readings from the absolute positioning system, such as GNSS, typically involves assessing the quality and reliability of the data it provides. Such assessment is e.g. performed by the processing circuitry 102. If the absolute positioning system reports "no data" or explicitly states that the data is of "low confidence," this typically falls at least under the low confidence category. This could mean the system recognizes that the conditions for reliable data are not met (such as insufficient satellites or poor signal quality). "Medium confidence" might be indicated by partial data availability or moderate signal quality and satellite coverage. "High confidence" typically implies conditions with strong, consistent signal reception from multiple satellites, low GDOP, and all system integrity checks passed. In some implementations, achieving high confidence may also require the availability of RTK (Real-Time Kinematic) corrections, which provide enhanced positioning accuracy. A loss of RTK corrections may contribute to degraded positioning accuracy and lead to low confidence in absolute positioning data. These assessments allow the computer system 100 to categorize the confidence level of the positioning data accurately. By configuring the processing circuitry 102 to detect and determine that there is low-confidence in the absolute positioning data, or that there is no available absolute positioning data, the computer system 100 can decide to operate the vehicle 10a based on data from the relative positioning system 60 in situations where the absolute positioning system 50 is not reliable, and thus allow the vehicle 10a to operate in environments where e.g. GPS signals are weak or obstructed, such as in urban canyons, tunnels, or areas with heavy tree cover. As such, the adaptability of the vehicle 10a to diverse operational environments may be enhanced, leading to improved operational resilience.

Accordingly, responsive to the determined low confidence in absolute positioning data, the processing circuitry 102 determines to rely less on the absolute positioning data and typically switches to an operation where the relative positioning system 60 is used for estimating the position of the vehicle 10 within the confined geographical area 200. It should be noted that the relative positioning system 60 can be used also when the absolute positioning system 50 is active to increase accuracy.

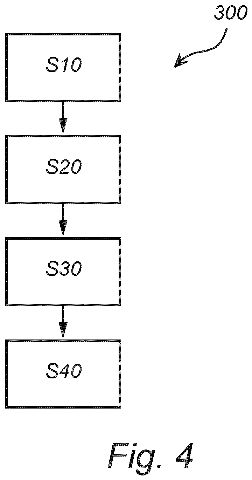

FIG. 4 is a flow chart of an exemplary method to control a vehicle 10 according to an example. More specifically, FIG. 4 is an exemplary computer-implemented method 300 according to an example. Thus the method 300 is implemented by the computer system 100 and the processing circuitry 102, as described herein. The computer-implemented method 300 is intended for trajectory planning of a plurality of vehicles 10, such as the vehicles 10a to 10d operating within the confined geographical area 200. For example, the method 300 is intended for trajectory planning of the heavy-duty vehicle 10a in relation to the heavy-duty vehicle 10b within the confined geographical area 200 in FIG. 2, and according to the examples in FIGS. 3A and 3B.

As illustrated in FIG. 4, the method 300 comprises a step S10 of determining, by the processing circuitry 102 of the computer system 100, one or more geographical zones 224, 226, 228 within the confined geographical area 200 where the vehicle positioning system arrangement 40 is anticipated to experience reduced positioning reliability or accuracy. Reduced positioning reliability or accuracy may here refer to that the absolute positioning data of the absolute positioning system 50 of one vehicle is of low confidence or absent in a geographical zone 224.

Moreover, the method 300 comprises a step S20 of determining, by the processing circuitry 102 of the computer system 100, positions of the vehicles within the confined geographical area.

In addition, the method 300 comprises a step S30 of determining, by the processing circuitry 102 of the computer system 100, based on the one or more geographical zones and the positions of the vehicles, that at least one vehicle 10b is anticipated to operate, or is operating in a geographical zone among the one or more geographical zones with anticipated reduced positioning reliability or accuracy.

Subsequently, the method 300 comprises a step S40 of adapting, by the processing circuitry 102 of the computer system 100, one or more trajectories of one or more other vehicles 10a in response to the determination that the at least one vehicle is anticipated to operate, or is operating in the geographical zone with anticipated reduced positioning reliability or accuracy, so as to avoid approaching the at least one vehicle.

For example, the method 300 determines to adapt the trajectory 221a of the vehicle 10a to an alternative trajectory 221b in response to that the vehicle 10b is anticipated to operate, or is operating in the geographical zone 224 with anticipated reduced positioning reliability or accuracy.

Typically, the processing circuitry 102 further comprises a step of determining the alternative trajectory 221b also based on the determined positions and trajectories of other autonomous vehicles 10 within the confined geographical area 200.

Typically, the method 300 also comprises a step of controlling the vehicle 10a according to the determined alternative trajectory 221b.

Optionally, in an extended example, the method 300 may further comprise receiving travel mission data for the vehicle 10a performing the travel mission, such as a transport mission, and using the received travel mission data for determining a distance between the vehicle 10a and the destination location 223 in the confined geographical area 200. Such data can be received by the processing circuitry 102. The processing circuitry 102 may typically also receive road topography data for the intended road. The road topography data includes information about the road's elevation, slope, curvature, and other geometric features. Road topography data is for example acquired by the absolute positioning system 50 and the relative positioning system 60, such as the onboard sensors and the GPS, as mentioned herein. The absolute positioning system 50 and the relative positioning system 60 may be integral part of an Autonomous Driving Systems.

For example, the processing circuitry 102 adapts the current trajectory 221a of the vehicle 10a to an alternative trajectory 221b. As shown in FIG. 2, the processing circuitry 102 adapts the current trajectory 221a, in which the vehicle 10a operates along the vehicle pathway 220a to perform its travel mission, such as the transportation of material from position 222 to position 223 within the confined geographical area 200, to the alternative trajectory 221b, in which the vehicle 10a instead operates along the vehicle pathway 220a' to perform its travel mission, such as the transportation of material from position 222 to position 223. Adapting a trajectory 221 of a vehicle 10 typically also includes adapting the driving mode of the vehicle 10. Hence, by way of example, the processing circuitry 102 may adapt the driving mode by adjusting traction power provided to the drive axles and wheels. Adjusting traction power as part of adapting the driving mode may be achieved by controlling the transfer of traction force to the wheels of the front axle 11 and the rear axle 12 (as shown in FIGS. 1A and 1B). The traction force is provided by a propulsion unit, such as the electric machine 20. In some examples, each axle, such as the front axle 11 and the rear axle 12, is powered by a separate electric machine. That is, the vehicle 10 comprises a plurality of electric machines 20. It should also be noted that the computer system 100 may be configured to adapt the traction power to another set of axles among the axles of the vehicle 10, e.g., between the rear axles 12 and 13 (as shown in FIG. 1A). In one example, the processing circuitry 102 also adjusts the propulsion power of the electric machine(s) 20 in response to the adapted trajectory. In other examples, the processing circuitry 102 adapts the driving mode by adjusting a steering angle of the steering device(s) 24, 26 of one or more wheels. Thus, the processing circuitry 102 is configured to adapt the driving mode by adjusting a steering angle of the steering device(s). Such an operation typically includes controlling one or more of the front and rear steering devices 24, 26 based on the adapted trajectory, such as the alternative trajectory 221b.

In some examples, there is provided a computer system 100 for trajectory planning of one or more vehicles 10, in particular one or more autonomous heavy-duty vehicles, operating within the confined geographical area 200. The computer system 100 comprises processing circuitry 102 configured to determine positions of the vehicles 10 within the confined geographical area 200, receive data from at least one vehicle 10b indicating that a vehicle positioning system 40, 50, 60 arrangement is experiencing, or is anticipated to experience, reduced positioning reliability or accuracy, and based on the received data, adapt one or more trajectories of one or more vehicles 10, 10a to avoid approaching the vehicle 10b experiencing, or anticipated to experience, reduced positioning reliability or accuracy. Such configuration allows for providing a reactive method to trajectory planning of vehicles 10. A technical benefit may include the ability to dynamically adapt vehicle trajectories in real time without relying on predefined geographical zones with reduced positioning reliability. By continuously monitoring vehicle positioning data and responding to unexpected localization failures, the computer system allows for uninterrupted and safe operation of autonomous heavy-duty vehicles, even in environments where positioning reliability may degrade unpredictably.

In this example, the processing circuitry 102 may further be configured to continuously identify new geographical zones where positioning reliability or accuracy is reduced, based on the positions of the vehicles 10 and data indicative of vehicle positioning system performance.

In this example, the processing circuitry 102 may further be configured to determine, based on the identified geographical zones, that at least one vehicle 10 is operating, or is anticipated to operate, in a geographical zone with reduced positioning reliability or accuracy.

In this example, the processing circuitry 102 may further be configured to adapt at least one trajectory of the vehicle experiencing, or anticipated to experience, reduced positioning reliability or accuracy to follow a trajectory of another vehicle.

In the above reactive method, the computer system 100 for trajectory planning of one or more vehicles 10, in particular one or more autonomous heavy-duty vehicles, operating within a confined geographical area 200, is configured to determine positions of the vehicles 10 within the confined geographical area 200, receive data from at least one vehicle indicating that a vehicle positioning system arrangement is experiencing, or is anticipated to experience, reduced positioning reliability or accuracy, and based on the received data, adapt one or more trajectories of one or more vehicles to avoid approaching the vehicle experiencing, or anticipated to experience, reduced positioning reliability or accuracy. For example, when a first vehicle 10, such as the vehicle 10b, loses positioning capability while approaching another vehicle 10, such as the vehicle 10a, the computer system 100 may dynamically determine a trajectory adaptation for the vehicle 10a to maintain the maximum possible distance from the vehicle 10b. Such an adaptation may involve re-routing the vehicle 10a via an alternative path to minimize the risk of unsafe interactions between the vehicles 10a and 10b.

In the proactive method, which is described in relation to FIGS. 3A, in combination with FIGS. 2 and 4, the computer system 100 is configured to determine one or more geographical zones within the confined geographical area 200 where a vehicle positioning system arrangement 40 is anticipated to experience reduced positioning reliability or accuracy. Based on the positions of the vehicles 10, the computer system 100 determines that at least one vehicle 10b is anticipated to operate, or is operating, in a geographical zone 224 with anticipated reduced positioning reliability or accuracy. The computer system 100 then adapts one or more trajectories of one or more other vehicles 10, 10a in response to the determined vehicle 10b operating in the geographical zone 224, so as to avoid approaching the vehicle 10b. By recognizing these zones in advance, the computer system 100 enables trajectory planning that reduces the likelihood of multiple vehicles 10 operating in close proximity when positioning reliability is compromised.

For example, the computer system 100 may ensure that only a single vehicle 10 is allowed to enter such a zone at a time, or it may slow down other vehicles, requiring them to wait until the zone is clear before proceeding.

In many cases, it may be advantageous to combine the reactive and proactive methods to manage both anticipated and unexpected positioning failures. Such configuration is particularly relevant in mixed-traffic environments, where both autonomous and manually driven vehicles operate within the same area. In such cases, the computer system 100 can automatically adapt the trajectories of autonomous vehicles, while manually driven vehicles may receive instructions prompting the driver to adjust the vehicle's path as needed. Although the described examples may primarily be intended for scenarios involving mixed traffic, it may also be applied in environments with exclusively autonomous vehicles.

In one example, the method 300 of FIG. 5, describing the proactive method, may be combined with the exemplified reactive method.

The above examples described with reference to FIGS. 2 to 4 are provided only as brief illustrative examples of the disclosure to facilitate the description and illustration of the operations of the proposed computer system 100 and the methods disclosed herein.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

Further details of one example of a computer system that can be used as the computer system 100 will now be described in relation to FIG. 5.

FIG. 5 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system 100 for trajectory planning of one or more vehicles 10, 10a to 10n, in particular one or more autonomous heavy-duty vehicles, operating within a confined geographical area 200, the computer system comprising processing circuitry configured to: determine one or more geographical zones 224, 226, 228 within the confined geographical area where a vehicle positioning system arrangement 40, 50, 60 is anticipated to experience reduced positioning reliability or accuracy; determine positions of the vehicles within the confined geographical area; determine, based on the one or more geographical zones and the positions of the vehicles, that at least one vehicle 10b is anticipated to operate, or is operating in a geographical zone among the one or more geographical zones with anticipated reduced positioning reliability or accuracy; and adapt one or more trajectories of one or more other vehicles 10a in response to the determination that the at least one vehicle is anticipated to operate, or is operating in the geographical zone with anticipated reduced positioning reliability or accuracy, so as to avoid approaching the at least one vehicle.

Example 2: The computer system of example 1, wherein the processing circuitry is configured to determine the one or more geographical zones based on data indicative of predetermined one or more geographical zones that are stored in a database accessible to the processing circuitry.

Example 3: The computer system of any previous examples, wherein the processing circuitry is configured to determine the one or more geographical zones based on data collected during operation of the one or more vehicles.

Example 4: The computer system of example 3, wherein the data comprises diagnostics data from one or more vehicle positioning system arrangements of the one or more vehicles.

Example 5: The computer system of any previous examples, wherein the processing circuitry is configured to determine the one or more geographical zones from data indicative of any one of a physical characteristic and an environmental condition of the confined geographical area that may negatively impact the performance of the vehicle positioning system arrangements of the vehicles.

Example 6: The computer system of any previous examples, wherein the processing circuitry is configured to adapt one or more trajectories of one or more other vehicles to control a number of vehicles present in a geographical zone at any given time.

Example 7: The computer system of any previous examples, wherein the processing circuitry is configured to adapt at least one trajectory of at least one other vehicle to follow a trajectory of another vehicle.

Example 8: The computer system of any previous examples, wherein the processing circuitry is configured to continuously identify new geographical zones with reduced positioning reliability or accuracy in a vehicle positioning system arrangement of any vehicle.

Example 9: The computer system of any previous examples, wherein the vehicle positioning system arrangement comprises a primary positioning system in the form of an absolute positioning system and a secondary positioning system configured to rely on relative positioning, the secondary positioning system being any one of an inertial measurement unit IMU, lidar, odometry, radar, ultrasonic sensor, mono camera, stereo camera, wheel speed sensor, steering angle sensor, and gyroscope.

Example 10: The computer system of any previous examples, wherein the processing circuitry is configured to prioritize trajectory adaptation based on mission data for the vehicles.

Example 11: The computer system of any previous examples, wherein the processing circuitry is configured to reactively adapting one or more trajectories of one or more other vehicles in response to receiving data from a vehicle, among the one or more vehicles, indicating that the vehicle positioning system arrangement of the vehicle is experiencing, or is anticipated to experience, reduced positioning reliability or accuracy in the confined geographical area.

Example 12: A system comprising the computer system of any one of examples 1-11 and a plurality of vehicles, wherein the computer system comprising processing circuitry configured to control the plurality of vehicles.

Example 13: A computer-implemented method for trajectory planning of one or more vehicles 10, 10a to 10n, in particular one or more autonomous heavy-duty vehicles, operating within a confined geographical area 200, the method comprising: - determining, by processing circuitry of a computer system, one or more geographical zones 224, 226, 228 within the confined geographical area where a vehicle positioning system arrangement 40, 50, 60 is anticipated to experience reduced positioning reliability or accuracy; - determining, by the processing circuitry, positions of the vehicles within the confined geographical area; - determining, by the processing circuitry, based on the one or more geographical zones and the positions of the vehicles, that at least one vehicle 10b is anticipated to operate, or is operating in a geographical zone among the one or more geographical zones with anticipated reduced positioning reliability or accuracy; and - adapting, by the processing circuitry, one or more trajectories of one or more other vehicles 10a in response to the determination that the at least one vehicle is anticipated to operate, or is operating in the geographical zone with anticipated reduced positioning reliability or accuracy, so as to avoid approaching the at least one vehicle.

Example 14: A computer program product comprising program code for performing, when executed by processing circuitry, the method of example 13.

Example 15: A non-transitory computer-readable storage medium comprising instructions which, when executed by processing circuitry, cause the processing circuitry to perform the method of example 13.

Example 16: A computer system for trajectory planning of one or more vehicles, in particular one or more autonomous heavy-duty vehicles, operating within a confined geographical area, the computer system comprising processing circuitry configured to determine positions of the vehicles within the confined geographical area, receive data from at least one vehicle indicating that a vehicle positioning system arrangement is experiencing, or is anticipated to experience reduced positioning reliability or accuracy, and based on the received data, adapt one or more trajectories of one or more vehicles to avoid approaching the vehicle experiencing, or anticipated to experience, reduced positioning reliability or accuracy.

Example 17: The computer system of example 16, wherein the vehicle positioning system arrangement comprises a primary positioning system in the form of an absolute positioning system.

Example 18: The computer system of example 16, wherein the vehicle positioning system arrangement comprises a secondary positioning system configured to rely on relative positioning.

Example 19. The computer system of example 18, wherein the secondary positioning system is any one of an inertial measurement unit IMU, lidar, odometry, radar, ultrasonic sensor, mono camera, stereo camera, wheel speed sensor, steering angle sensor, and gyroscope.

Example 20. The computer system of examples 16 to 19, wherein the processing circuitry is configured to prioritize trajectory adaptation based on mission data for the vehicles.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for trajectory planning of one or more vehicles (10, 10a to 10n), in particular one or more autonomous heavy-duty vehicles, operating within a confined geographical area (200), the computer system comprising processing circuitry configured to:
- determine one or more geographical zones (224, 226, 228) within the confined geographical area where a vehicle positioning system arrangement (40, 50, 60) is anticipated to experience reduced positioning reliability or accuracy;
- determine positions of the vehicles within the confined geographical area;
- determine, based on the one or more geographical zones and the positions of the vehicles, that at least one vehicle (10b) is anticipated to operate, or is operating in a geographical zone among the one or more geographical zones with anticipated reduced positioning reliability or accuracy; and
- adapt one or more trajectories of one or more other vehicles (10a) in response to the determination that the at least one vehicle is anticipated to operate, or is operating in the geographical zone with anticipated reduced positioning reliability or accuracy, so as to avoid approaching the at least one vehicle.

2. The computer system of claim 1, wherein the processing circuitry is configured to determine the one or more geographical zones based on data indicative of predetermined one or more geographical zones that are stored in a database accessible to the processing circuitry.

3. The computer system of any previous claims, wherein the processing circuitry is configured to determine the one or more geographical zones based on data collected during operation of the one or more vehicles.

4. The computer system of claim 3, wherein the data comprises diagnostics data from one or more vehicle positioning system arrangements of the one or more vehicles.

5. The computer system of any previous claims, wherein the processing circuitry is configured to determine the one or more geographical zones from data indicative of any one of a physical characteristic and an environmental condition of the confined geographical area that may negatively impact the performance of the vehicle positioning system arrangements of the vehicles.

6. The computer system of any previous claims, wherein the processing circuitry is configured to adapt one or more trajectories of one or more other vehicles to control a number of vehicles present in a geographical zone at any given time.

7. The computer system of any previous claims, wherein the processing circuitry is configured to adapt at least one trajectory of at least one other vehicle to follow a trajectory of another vehicle.

8. The computer system of any previous claims, wherein the processing circuitry is configured to continuously identify new geographical zones with reduced positioning reliability or accuracy in a vehicle positioning system arrangement of any vehicle.

9. The computer system of any previous claims, wherein the vehicle positioning system arrangement comprises a primary positioning system in the form of an absolute positioning system and a secondary positioning system configured to rely on relative positioning, the secondary positioning system being any one of an inertial measurement unit (IMU), lidar, odometry, radar, ultrasonic sensor, mono camera, stereo camera, wheel speed sensor, steering angle sensor, and gyroscope.

10. The computer system of any previous claims, wherein the processing circuitry is configured to prioritize trajectory adaptation based on mission data for the vehicles.

11. The computer system of any previous claims, wherein the processing circuitry is configured to reactively adapting one or more trajectories of one or more other vehicles in response to receiving data from a vehicle, among the one or more vehicles, indicating that the vehicle positioning system arrangement of the vehicle is experiencing, or is anticipated to experience, reduced positioning reliability or accuracy in the confined geographical area.

12. A system comprising the computer system of any one of claims 1-11 and a plurality of vehicles, wherein the computer system comprising processing circuitry configured to control the plurality of vehicles.

13. A computer-implemented method for trajectory planning of one or more vehicles (10, 10a to 10n), in particular one or more autonomous heavy-duty vehicles, operating within a confined geographical area (200), the method comprising:
- determining, by processing circuitry of a computer system, one or more geographical zones (224, 226, 228) within the confined geographical area where a vehicle positioning system arrangement (40, 50, 60) is anticipated to experience reduced positioning reliability or accuracy;
- determining, by the processing circuitry, positions of the vehicles within the confined geographical area;
- determining, by the processing circuitry, based on the one or more geographical zones and the positions of the vehicles, that at least one vehicle (10b) is anticipated to operate, or is operating in a geographical zone among the one or more geographical zones with anticipated reduced positioning reliability or accuracy; and
- adapting, by the processing circuitry, one or more trajectories of one or more other vehicles (10a) in response to the determination that the at least one vehicle is anticipated to operate, or is operating in the geographical zone with anticipated reduced positioning reliability or accuracy, so as to avoid approaching the at least one vehicle.

14. A computer program product comprising program code for performing, when executed by processing circuitry, the method of claim 13.

15. A non-transitory computer-readable storage medium comprising instructions which, when executed by processing circuitry, cause the processing circuitry to perform the method of claim 13.
